# EUROPEAN PATENT SPECIFICATION

(11) **EP 2 468 544 B1**
(45) Date of publication and mention of the grant of the patent: **05.03.2014**
(21) Application number: 11190588.1
(22) Date of filing: 24.11.2011
(51) Int. Cl.: B60J 7/02, B60R 13/02, B62D 25/06

(54) **Upper part structure of vehicle**
Oberteilstruktur eines Fahrzeugs
Structure de la partie supérieure d'un véhicule

(30) Priority: 21.12.2010 JP 2010284761
(43) Date of publication of application: 27.06.2012
(73) Proprietor: Honda Motor Co., Ltd., Tokyo 107-8556 (JP)
(72) Inventor: Tahara, Daiki, Saitama, 351-0193 (JP)
(74) Representative: Trossin, Hans-Jürgen

(56) References cited:
- DE-A1-102007 012 486
- JP-A- 2003 133 826
- JP-A- 2006 246 052
- JP-A- 2009 246 740
- KR-A- 20090 059 979

## Description

The present invention relates to a vehicular upper part structure including a roof panel, a rear roof rail disposed on a rear end of the roof panel, a roof stiffener disposed forward of the rear roof rail, and an antenna disposed atop the roof panel.

In JP 2009/246740 A, on which the preamble of claim 1 is based, the rear end of the roof stiffener is located above, and overlapping, the rear roof rail. The antenna unit is attached to the roof panel by a bolt and a nut with the roof panel and the stiffener disposed between the antenna unit and the nut.

Known vehicular upper part structures are disclosed, for example, in JP-A-2003-212053. The disclosed vehicular upper part structure includes a roof panel and a frame (roof rail) extending laterally of a vehicle along a front end of the roof panel. The structure further includes a reinforcement member provided to the roof rail, and an antenna attached to the reinforcement member and the roof panel. The reinforcement member has rigidity sufficient to support the antenna. In other words, the dedicated reinforcement member for supporting the antenna is essential to the vehicular upper part structure.

The provision of the reinforcement member to the roof rail results in increase in the number of components of the structure or the vehicle. It is troublesome to manage such increased number of the components. The increased number of the components results in increase in the number of steps for assembling the components. To address these problems, improvements are needed in the structure.

An object of the present invention is to provide a vehicular upper part structure made of smaller number of components.

Accordingly to one aspect of the present invention, there is provided an upper part structure of a vehicle in accordance with claim 1. The structure comprises: a roof panel disposed at an upper part of the vehicle; a rear roof rail disposed on a rear end portion of the roof panel and extending laterally of the vehicle; a roof stiffener disposed forward of the rear roof rail and extending laterally of the vehicle; an antenna disposed on a top surface of the roof panel and located above the rear roof rail and the roof stiffener; the roof stiffener having a front support part formed integrally therewith for supporting a front part of the antenna; and the rear roof rail having a rear support part formed integrally therewith for supporting a rear part of the antenna.

The roof stiffener has the front support part formed integrally therewith for supporting the front part of the antenna. The rear roof rail has the rear support part formed therewith for supporting the rear part of the antenna. Providing these front and rear support parts ensures rigidity sufficient to support the antenna. Since the roof stiffener has the front support part formed integrally therewith, the roof stiffener can be used in part to support the front part of the antenna. Likewise, the rear roof rail has the rear support part formed integrally therewith, and hence can be used in part to support the rear part of the antenna. Use of such a roof stiffener and a rear roof rail makes it unnecessary to have an additional, separate support member for supporting the antenna. This results in reduction in the number of components of the upper part structure of the vehicle. The reduction in the number of the components reduces the number of steps for assembling the components.

In a preferred form of the present invention, the front support part of the roof stiffener includes a front reinforcing bead having a downward recessed shape, and the rear support part of the rear roof rail includes a rear reinforcing bead having a downward recessed shape. The rear reinforcing bead extends more laterally outward of the vehicle than the front reinforcing bead.

The rear reinforcing bead extending more laterally outward of the vehicle than the front reinforcing bead provides the rear support part of the rear roof rail with sufficient rigidity to withstand a stress or load concentrated at the rear support part when the antenna is subjected to air resistance during running of the vehicle, such that the antenna remains stable without being adversely affected by the air resistance.

In a further preferred form of the present invention, the front reinforcing bead of the front support part of the roof stiffener is oriented in a front-and-rear direction of the vehicle and has a substantially U-shaped configuration widening rearward of the vehicle. The front support part further includes a portion surrounded by the front reinforcing bead and being downward recessed in spaced relation to the roof panel.

The substantially U-shaped configuration of the front reinforcing bead conforms to the contour of the front part of the antenna such that the front reinforcing bead runs along the front part of the antenna to support the front part precisely.

The portion surrounded by the front reinforcing bead is recessed in spaced relation to the roof panel to prevent contact between the surrounded portion and the roof panel during the running of the vehicle, such that no noise can be made between the surrounded portion and the roof panel.

In a further preferred form of the invention, the rear reinforcing bead of the rear support part includes right and left rear bead portions and an opening portion disposed between the left and right rear bead portions in a middle of a width of the vehicle.

The opening portion disposed between the left and right rear bead portions allows air in a space defined by the rear roof rail to be discharged out through the opening portion when the upper part structure of the vehicle is subjected to electrodeposition coating. The discharge of the air out of the opening portion allows even coating over the entire structure.

The left and right rear bead portions of the rear reinforcing bead support left and right rear portions of the rear part of the antenna to balance the left and right rear portions such that the rear part of the antenna is stably supported by the rear reinforcing bead.

In a further preferred form of the invention, the portion surrounded by the front reinforcing bead has a cutout portion formed at a rear end of the portion surrounded by the front reinforcing bead.

The cutout portion formed at the rear end of the portion surrounded by the front reinforcing bead defines a space where a screw attaching the antenna to the roof panel is disposed and a wire harness connected to the antenna is disposed. Within such a space, the screw and the wire harness can be freely disposed.

A certain preferred embodiment of the present invention will hereinafter be described in detail, by way of example only, with reference to the accompanying drawings, in which:
Fig. 1 is a perspective view of a vehicle upper part structure according to the present invention;
Fig. 2 is a fragmentary view of the structure as the structure is viewed in a direction of an arrow 2;
Fig. 3 is a cross-sectional view taken along line 3-3 of Fig. 2
Fig. 4 is an enlarged view of a portion of the structure, which portion is indicated by reference numeral 4 in Fig. 3;
Fig. 5 is a view of the structure as the structure is viewed in a direction of arrow 5
Fig. 6 is an exploded view of the structure shown in part in cross-section;
Fig. 7 is a view of the structure as the structure is viewed in a direction of an arrow 7;
Fig. 8 is an exploded perspective view of the structure according to the present invention;
Fig. 9 is a fragmentary perspective view of front and rear supports of the structure shown in Fig. 7; and
Fig. 10 is a view showing an antenna supported by the front and rear supports.

### DETAILED DESCRIPTION OF THE PREFERRED EMBODIMENTS

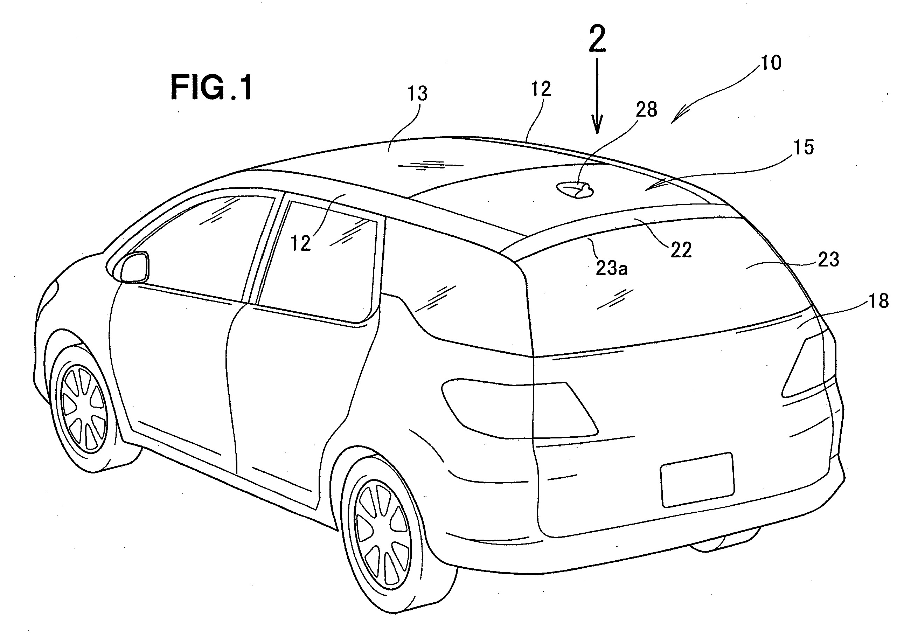

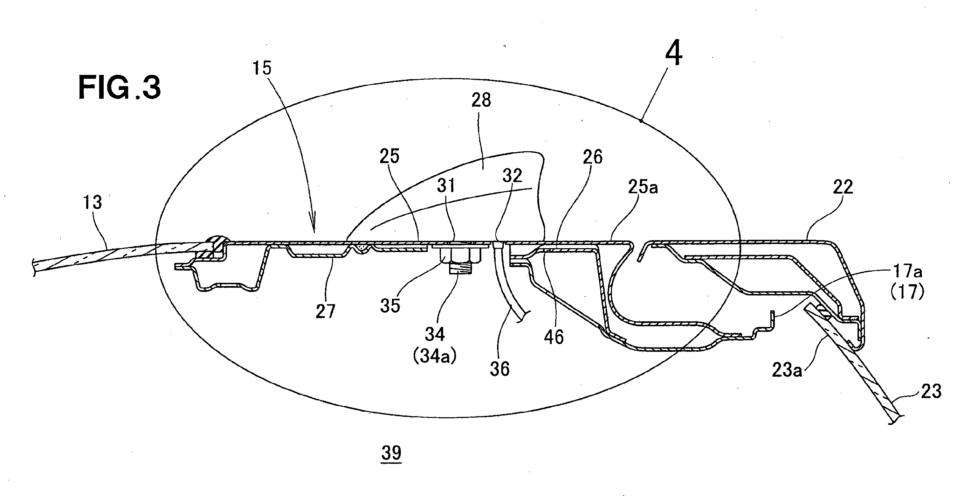

Referring to Fig. 1, a vehicle upper part structure 10 includes left and right side roof rails 12, 12 laterally spaced from each other, a roof glass 13 disposed between the side roof rails 12, 12, a roof structure 15 disposed rearward of the roof glass 13, and a tail gate 18 movable between an open position to open a rear opening 17 (Fig. 3) and a closed position to close the rear opening 17.

The tail gate 18 includes a rear aesthetic portion 22 disposed along an upper rear edge 17a of the rear opening 17, and a tail gate windowpane 23 attached at its upper edge 23a to the rear aesthetic portion 22.

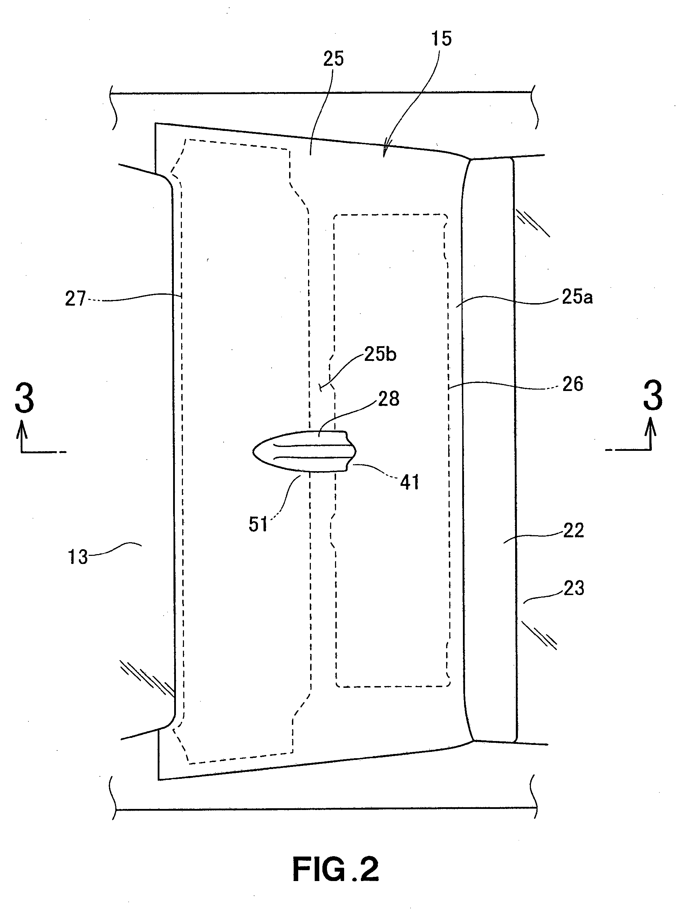

As shown in Fig. 2 and Fig. 3, the roof structure 15 includes a rood panel 25 disposed at an upper part of a vehicle, a rear roof rail 26 disposed on a rear end portion 25a of the roof panel 25, a roof stiffener 27 disposed forward of the rear roof rail 26, and an antenna 28 disposed on a top or outer surface 25b of the roof panel 25 and located above the rear roof rail 26 and the roof stiffener 27.

The antenna 28 is connected to a wire harness 36 having an antenna plug (not shown) connected to a vehicular radio etc.. The antenna 28 receives electrical wave from outside the vehicle to transmit the received wave to the vehicular radio. The antenna 28 is a vehicular roof top antenna conventionally used.

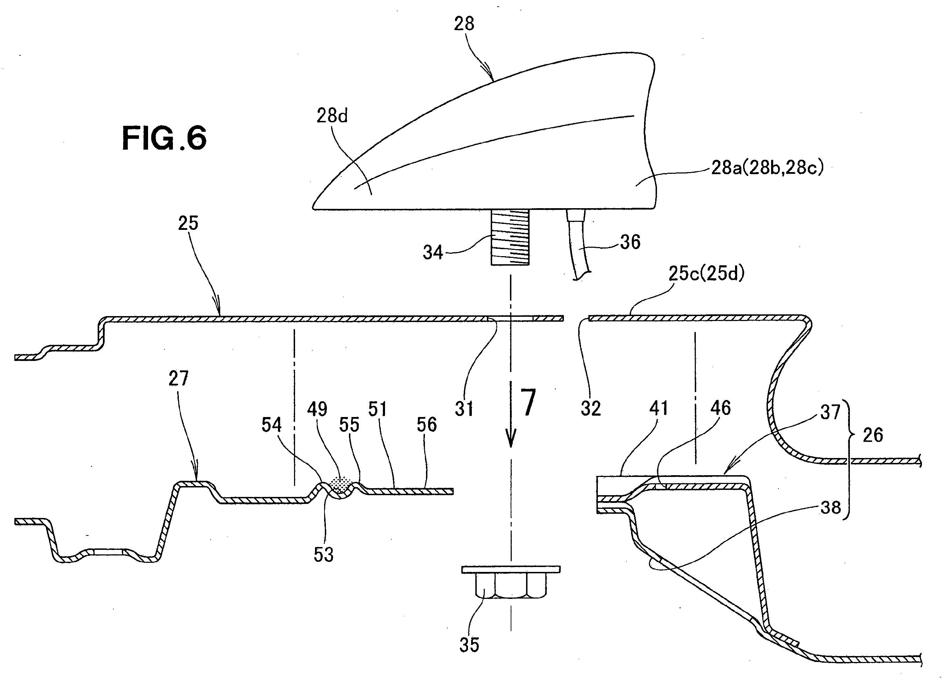

The roof panel 25 is disposed rearward of the roof glass 13 substantially in flush with the roof glass 13 and is a panel having a rectangular shape as viewed in plan. The roof panel 25 has an attachment hole 31 (see also Fig. 6) formed centrally thereof for attachment of the antenna 28 to the roof panel 25, and an introduction hole 32 (see also Fig. 6) formed rearward of the attachment hole 31 for introduction of the wire harness 36 into the vehicle.

Attached to the antenna 28 is a bolt 34 projecting through the attachment hole 31. The bolt 34 has a threaded portion 34a threadedly engaged with a nut 35 to thereby attach the antenna 28 to the roof panel 25. The wire harness 36 is introduced through the introduction hole 32 toward a passenger compartment 39 of the vehicle.

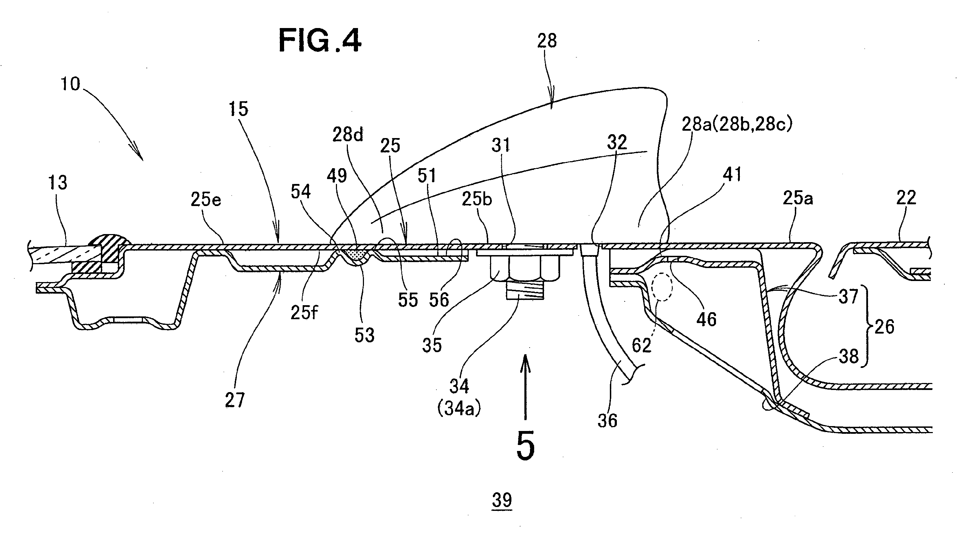

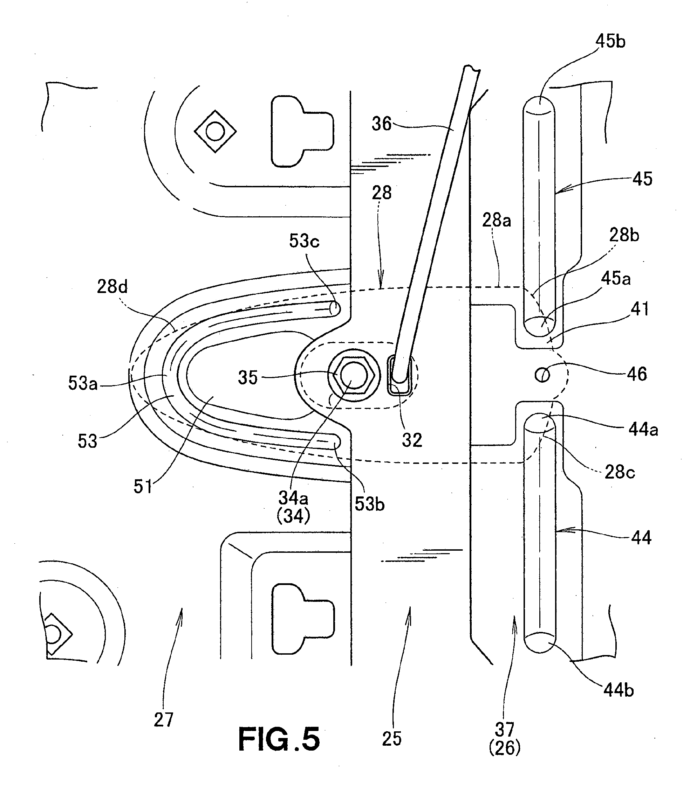

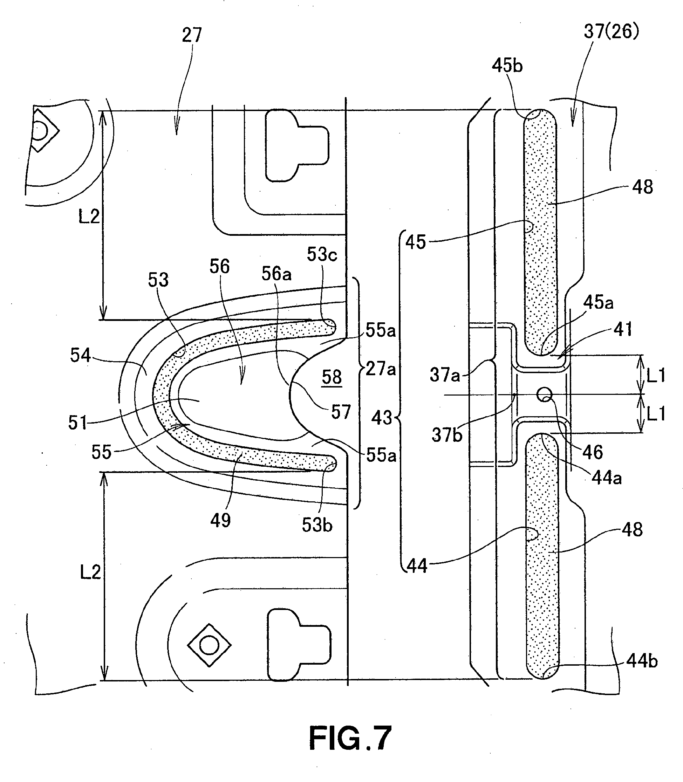

As shown in Fig. 4 and Fig. 5, the rear roof rail 26 disposed on the rear end portion 25a of the roof panel 25 extends laterally of the vehicle. The rear roof rail 26 is attached through an adhesive 48 (Fig. 7) or spot-welding to the rear end portion 25a of the roof panel 25 for reinforcing the roof panel 25. The rear roof rail 26 includes upper and lower rails 37, 38 defining a closed cross-section therebetween. The adhesive 48 is a sealer providing sealing engagement with the roof panel 25 in addition to adhering to the roof panel 25.

The upper rail 37 of the rear roof rail 26 includes a rear support part 41 formed integrally therewith for supporting a rear part 28a of the antenna 28. The rear support part 41 is one part of the rear roof rail 26 (the upper rail 37) and serves to support the rear part 28a of the antenna 28.

As shown in Fig. 6 and Fig. 7, the upper rail 37 of the rear roof rail 26 has a front central area 37a extending laterally of the vehicle and defining the rear support part 41. The rear support part 41 includes a rear reinforcing bead 43 which is downward recessed, and an opening portion 46 (hereinafter referred to as "a vent-hole") formed at a middle of a width of the vehicle.

The rear reinforcing bead 43 extends more laterally outwardly of the vehicle than a front reinforcing bead 53 of the roof stiffener 27. More specifically, the rear reinforcing bead 43 includes a left rear bead portion 44 disposed leftward of a middle 37b of the length of the front central area 37a, and a right rear bead portion 45 disposed rightward of the middle 37b.

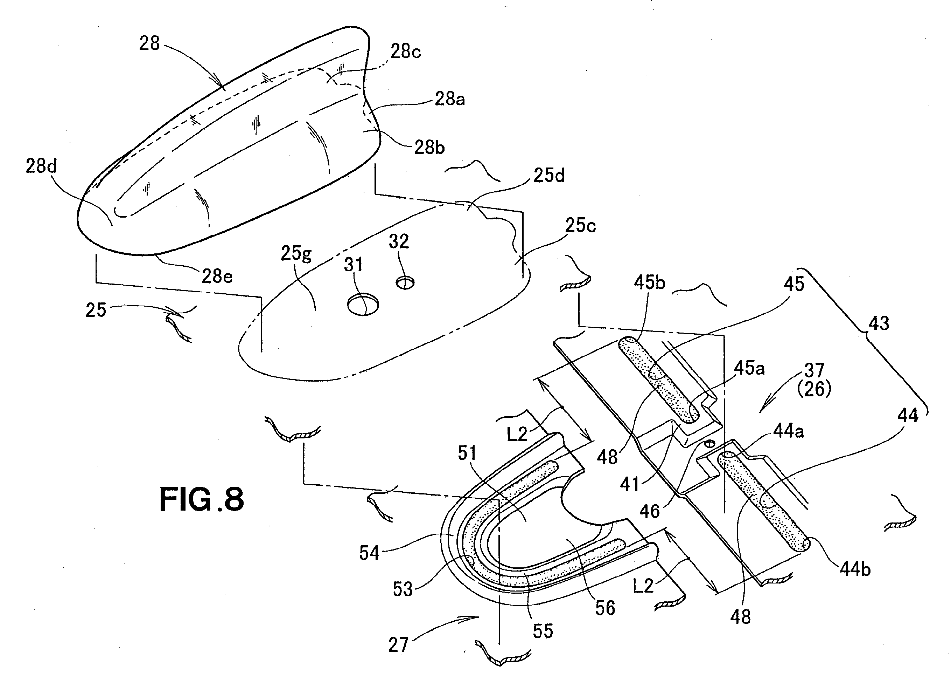

The left rear bead portion 44 extends laterally of the vehicle and has a left inner end 44a disposed proximate the middle 37b, and a left outer end 44b disposed opposite the left inner end 44a. The left inner end 44a of the left rear bead portion 44 is offset leftward from the middle 37b by a distance L1 set so that the left inner end 44a of the left rear bead portion 44 is vertically aligned with a left rear portion 28b of the rear part 28a of the antenna 28, as shown in Fig. 8. The left outer end 44b of the left rear bead portion 44 is offset more leftward than a left outer end 53b of the front reinforcing bead 53 of the roof stiffener 27 by a distance L2, as shown in Fig. 7.

As shown in Fig. 7 and Fig. 8, the left rear bead portion 44 adheres to the roof panel 25 through the adhesive 48 filling the left rear bead portion 44. The roof panel 25 has a portion 25c corresponding to the left rear bead portion 44, and the left rear portion 28b of the antenna 28 abuts on the portion 25c of the roof panel 25. This means that the left rear portion 28b of the antenna 28 is supported by the left inner end 44a of the left rear bead portion 44 with the portion 25c of the roof panel 25 interposed between the left rear portion 28b and the left inner end 44a.

The right rear bead portion 45 of the rear reinforcing bead 43 extends laterally of the vehicle and has a right inner end 45a disposed proximate the middle 37b, and a right outer end 45b opposite the right inner end 44a. The right inner end 45a of the right rear bead portion 45 is offset rightward from the middle 37b by a distance L1 set so that the right inner end 45a of the right rear bead portion 45 is vertically aligned with a right rear portion 28c of the rear part 28a of the antenna 28. The right outer end 45b of the right rear bead portion 45 is offset more rightward than a right outer end 53c of the front reinforcing bead 53 by a distance L2.

The right rear bead portion 45 adheres to the roof panel 25 through the adhesive 48 filling the right rear bead portion 45. The roof panel 25 has a portion 25d corresponding to the right rear bead portion 45, and the right rear portion 28c of the antenna 28 abuts on the portion 25d of the roof panel 25. This means that the right rear portion 28c of the antenna 28 is supported by the right inner end 45a of the right rear bead portion 45 with the portion 25d of the roof panel 25 interposed between the right rear portion 28c and the right inner end 45a.

As stated above, the rear reinforcing bead 43 is composed of the left and right rear bead portions 44, 45 which support the left rear portion 28b of the antenna 28 and the right rear portion 28c of the antenna 28, respectively. Namely, the antenna 28 is stably supported at the rear part 28a by the rear reinforcing bead 43 (the left rear bead portion 44 and the right rear bead portion 45).

As shown in Fig. 4, the antenna 28 is attached to the top surface 25b of the roof panel 25 by means of the bolt 34 and the nut 35 in the manner as stated above.

A stress or load may be concentrated at the rear support part 41 supporting the rear part 28a of the antenna 28 when the antenna 28 is subjected to air resistance during running of the vehicle. To bear such a load concentrated at the rear support part 41, the rear reinforcing bead 43 (the left and right rear bead portions 44, 45) is arranged to extend more laterally outward of the vehicle than the front reinforcing bead 53 such that the left outer end 44b of the left rear bead portion 44 is offset more laterally outward than the left outer end 53b of the front reinforcing bead 53 by the distance L2 and the right outer end 45b of the right rear bead portion 45 is offset more laterally outward than the right outer end 53c of the front reinforcing bead 53 by the distance L2, as discussed above. This arrangement of the rear reinforcing bead 43 provides the rear support part 41 with sufficient rigidity.

As shown in Fig. 7, the vent-hole 46 of the rear support part 41 is formed at the middle 37b of the length of front central area 37a between the left and right bead portions 44 and 45. The vent-hole 46 allows air 62 (Fig. 4) in a spaced defined by the rear roof rail 26 to be discharged out through the vent-hole 46 as the vehicle upper part structure 10 is subjected to electrodeposition coating. The discharge of the air 62 out of the vent-hole 62 allows even coating over the entire structure 10.

As shown in Fig. 4 and Fig. 5, the roof stiffener 27 is disposed forward of the rear roof rail 26 and extends laterally of the vehicle on a front end portion 25e of the roof panel 25. The roof stiffener 27 is attached to the front end portion 25e of the roof panel 25 through an adhesive 49 (Fig. 7) or spot-welding for reinforcing the roof panel 25. The adhesive 49 is a sealer providing sealing engagement with the front end portion 25e as well as adhering to the front end portion 25e.

The roof panel 25, which is reinforced by the roof stiffener 27, has sufficient rigidity even with the roof glass 13 disposed forward of the roof panel 25. The roof stiffener 27 has a front support part 51 formed integrally therewith for supporting a front part 28d of the antenna 28. The front support part 51 is one part of the roof stiffener 27 and serves to support the front part 28d of the antenna 28.

As shown in Fig. 6 and Fig. 7, the roof stiffener 27 has a front central area 27a defining the front support part 51. The front support part 51 includes the front reinforcing bead 53 which is downward recessed. In addition, the front support part 51 includes an outer raised portion 54 disposed outside the front reinforcing bead 53, an inner raised portion 55 disposed inside the front reinforcing bead 53, and a surrounded portion 56 disposed inside the inner raised portion 55.

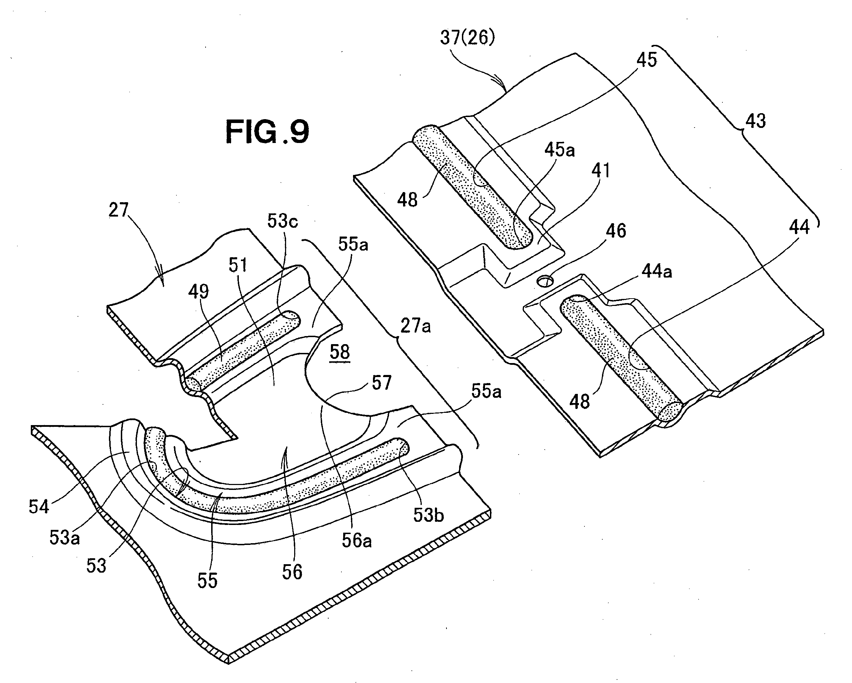

As shown in Fig. 7 and Fig. 9, the front reinforcing bead 53 has a front end 53a and left and right outer ends 53b, 53c. The front reinforcing bead 53 is oriented in a front-and-rear direction of the vehicle and has a substantially U-shaped configuration widening in a direction from the front end 53a to the left and right outer ends 53b, 53c.

The front reinforcing bead 53 adheres to the roof panel 25 with the adhesive 49 filling the front reinforcing bead 53 (see also Fig. 4).

As shown in Fig. 8, the roof panel 25 has a portion 25g corresponding to the front reinforcing bead 53, and the front part 28d of the antenna 28 abuts on the portion 25g of the roof panel 25. The front reinforcing bead 53 is disposed along a contour 28e of the front part 28d of the antenna 28. The front reinforcing bead 53 thus supports the front part 28d of the antenna 28. Since the front part 28d of the antenna 28 is supported by the front reinforcing bead 53 while the rear part 28a of the antenna 28 is supported by the rear reinforcing bead 43 (the left and right rear bead portions 44 and 45), the antenna 28 is supported sufficiently.

As shown in Fig. 7 and Fig. 9, the outer raised portion 54 projects upward running along the front reinforcing bead 53. The outer raised portion 54 abuts on a bottom or inner surface 25f of the roof panel 25 with the front reinforcing bead 53 attached to the roof panel 25 by means of the adhesive 49 (see Fig. 4).

The inner raised portion 55 projects upward running along the front reinforcing bead 53. The inner raised portion 55 abuts on the inner surface 25f of the roof panel 25 with the front reinforcing bead 53 attached to the roof panel 25 by means of the adhesive 49 (see Fig. 4).

The outer and inner raised portions 54, 55 disposed outside and inside the front reinforcing bead 53, respectively, provide the front reinforcing bead 53 (the front support part 51) with sufficient rigidity.

As shown in Fig. 8, the front part 28d of the antenna 28 abuts on the portion 25g of the roof panel 25 corresponding to the front reinforcing bead 53, such that the front part 28d of the antenna 28 is supported by the front reinforcing bead 53 (the front support part 51) with the portion 25g interposed between the front part 28d and the front reinforcing bead 53.

As shown in Fig. 7 and Fig. 9, the surrounded portion 56, which is disposed inside the inner raised portion 55, is surrounded by the front reinforcing bead 53. The surrounded portion 56 is a downward recess spaced from the roof panel 25, and has a cutout portion 57 formed at a rear end 56a of the surrounded portion 56. The cutout portion 57 extends to opposing rear ends 55a of the inner raised portion 55, but may be formed only at the rear end 56a of the surrounded portion 56.

The surrounded portion 56, which is downward recessed, is spaced downward from the roof panel 25 with the front reinforcing bead 53 (the roof stiffener 27) attached to the roof panel 25 by means of the adhesive 49. Since the surrounded portion 56 is spaced from the roof panel 25, no contact may be made between the surrounded portion 56 and the roof panel 25. It thus becomes possible to prevent noise from being made due to contact between the recessed portion 56 and the roof panel 25 during running of the vehicle.

The cutout portion 57, which is formed at the rear end 56a of the portion 56 surrounded by the front reinforcing bead 53, defines a space 58 used in disposing the bolt 34 and the wire harness 36 (Fig. 4). As best shown in Fig. 4, the bolt 34 and the nut 35 attach the antenna 28 to the roof panel 25.

The rear roof rail 26 is attached to the rear end portion 25a of the roof panel 25 through the adhesive 48 or the spot-welding, and the rear roof rail 26 (the upper rail 37) has the rear support part 41 formed integrally therewith. The roof stiffener 27 is attached to the front end portion 25e of the roof panel 25 through the adhesive 49 or the spot-welding. The roof stiffener 27 has the front support part 51 formed integrally therewith. The front part 28d of the antenna 28 is supported by the front support part 51 of the roof stiffener 27 with the portion 25g of the roof panel 25 interposed between the front part 28d and the front support part 51. The rear part 28a of the antenna 28 is supported by the rear support part 41 of the upper rail 37 of the rear roof rail 26 with the portions 25c, 25d of the roof panel 25 interposed between the rear part 28a and the rear support part 41. The front and rear supports 51, 41 are rigid enough to support the antenna 28.

The front support part 51, which is one part of the roof stiffener 27, is used for supporting the front part 28d of the antenna 28. Similarly, the rear support part 41, which is one part of the upper rail 37, is used for supporting the rear part 28a of the antenna 28. Provision of the front and rear supports 51, 41 integral with the roof stiffener 27 and the upper rail 27, respectively eliminates need to provide a separate member for supporting the antenna 28. This results in reduction in the number of the components of the structure 10. The reduction in the number of the components of the structure 10 facilitates management of the components and reduces the number of steps for assembling the components.

Typically, a vehicle with a roof glass has a roof stiffener and a rear roof rail disposed in spaced relation to the roof stiffener, as can be seen in the illustrated embodiment. Use of the upper part structure 10 of the present invention in such a vehicle with the roof glass can reduce the number of components of the vehicle to thereby facilitate management of the components as well as to reduce the number of steps for assembling the vehicle.

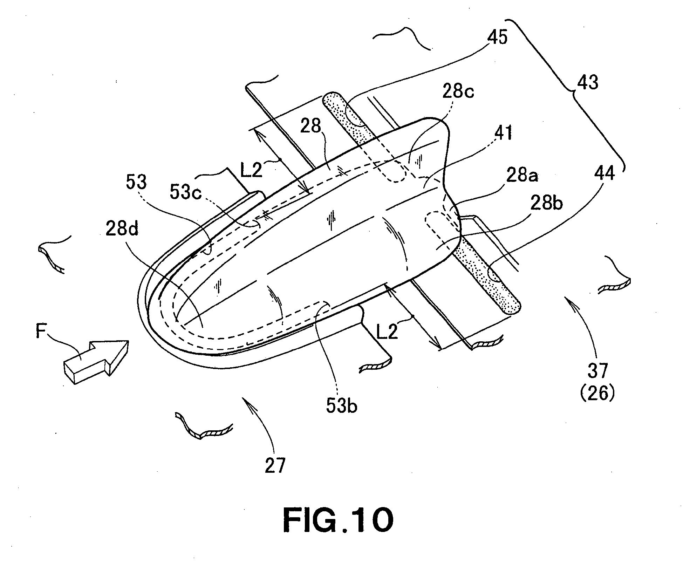

Description will be made as to the antenna 28 subjected to air resistance during running of the vehicle with reference to Fig. 8 and Fig. 10. It is to be noted that the antenna 28 is shown with the roof panel 25 removed for the purpose of better understanding.

As shown in Fig. 10, air resistance F is applied to the front part 28d of the antenna 28, as indicated by an arrow, during the running of the vehicle. The application of the air resistance F forces the antenna 28 to pivot upward on the rear part 28a. This results in stress or load being concentrated at the rear support part 41 through the rear part 28a and the portions 25c, 25d of the roof panel 25. In this regard, as discussed hereinbefore, the portion 25c of the roof panel 25 corresponds to the left rear bead portion 44 of the rear reinforcing bead 43 of the rear support part 41. Disposed on the portion 25c is the left rear portion 28b of the rear part 28a of the antenna 28. The portion 25d of the rood panel 25 corresponds to the right rear bead portion 45 of the rear reinforcing bead 43 of the rear support part 41. Disposed on the portion 25d is the right rear portion 28c of the rear part 28a of the antenna 28. In short, the rear part 28a of the antenna 28 is disposed on the portions 25c, 25d of the roof panel 25 which correspond to the rear reinforcing bead 43 of the rear support part 41. The rear reinforcing bead 43 (the left and right rear bead portions 44, 45) extends more laterally outward of the vehicle than the front reinforcing bead 53, as discussed hereinbefore. More specifically, the left rear bead portion 44 of the rear reinforcing bead 43 of the rear support part 41 has a portion of length L2 located leftward of the left outer end 53b of the front reinforcing bead 53. The right rear bead portion 45 of the rear reinforcing bead 43 of the rear support part 41 has a portion of length L2 located rightward of the right outer end 53c of the front reinforcing bead 53. The rear reinforcing bead 43, which includes the left and right rear bead portions 44, 45, provides the rear support part 41 with rigidity sufficient to support the antenna 28, such that the antenna 28 remains stable without being adversely effected by the air resistance F.

It will be appreciated that the arrangement of the vehicle upper part structure 10 is not limited to that discussed above but may be changed or modified to, for example, provide a single rear reinforcing bead rather than the two different rear bead portions, or the antenna 28 attached directly to the rear roof rail 26 and the roof stiffener 27 with the attachment hole 31 formed through the roof panel 25. Further, the roof structure 15, the roof panel 25, the rear roof rail 26, the roof stiffener 27, the antenna 28, the rear support part 41, the rear reinforcing bead 43, the left and right rear bead portions 44, 45, the vent-hole 46, the front support part 51, the front reinforcing bead 53, the surrounded portion 56 and the cutout portion 57 may have other shapes or arrangement than those discussed with reference to the drawings.

The present invention is applicable to a vehicle with an antenna attached to a roof panel supported by a roof rail or a roof stiffener.

An upper part structure (10) of a vehicle includes a roof panel (25) disposed at an upper part of the vehicle, a rear roof rail (26) disposed on a rear end portion (25a) of the roof panel (25) and extending laterally of the vehicle, a roof stiffener (27) disposed forward of the rear roof rail (26) and extending laterally of the vehicle, and an antenna (28) disposed on a top surface (25b) of the roof panel (25) and located above the rear roof rail (26) and the roof stiffener (27). The roof stiffener (27) has a front support part (51) formed integrally therewith for supporting a front part (28d) of the antenna (28). The rear roof rail (26) has a rear support part (41) formed integrally therewith for supporting a rear part (28a) of the antenna (28).

## Claims

1. An upper part structure (10) of a vehicle, the structure (10) comprising:
a roof panel (25) disposed at an upper part of the vehicle;
a rear roof rail (26) disposed on a rear end portion (25a) of the roof panel (25) and extending laterally of the vehicle;
a roof stiffener (27) disposed forward of the rear roof rail (26) and extending laterally of the vehicle;
an antenna (28) disposed on a top surface (25b) of the roof panel (25) and located above the rear roof rail (26) and the roof stiffener (27);
the roof stiffener (27) having a front support part (51) formed integrally therewith for supporting a front part (28d) of the antenna (28), and the rear roof rail (26) having a rear support part (41) formed integrally therewith for supporting a rear part (28a) of the antenna (28), **characterized in that** a rear end of the roof stiffener (27) is forward, separated and spaced from a front end of the rear roof rail (26) in a front-to-back direction of the vehicle (26).

2. The structure of claim 1,
wherein the front support part (51) of the roof stiffener (27) includes a front reinforcing bead (53) having a downward recessed shape, and the rear support part (41) of the rear roof rail (26) includes a rear reinforcing bead (43) having a downward recessed shape, the rear reinforcing bead (43) extending more laterally outward of the vehicle than the front reinforcing bead (53).

3. The structure of claim 2,
wherein the front reinforcing bead (53) of the front support part (51) of the roof stiffener (27) is oriented in a front-and-rear direction of the vehicle and has a substantially U-shaped configuration widening rearward of the vehicle, the front support part (51) further including a portion (56) surrounded by the front reinforcing bead (53) and being downward recessed in spaced relation to the roof panel (25).

4. The structure of claim 2 or 3,
wherein the rear reinforcing bead (43) of the rear support part (41) includes right and left rear bead portions (44, 45) and an opening portion (46) disposed between the left and right rear bead portions (44, 45) in a middle of a width of the vehicle.

5. The structure of claim 3 or 4,
wherein the portion (56) surrounded by the front reinforcing bead (53) has a cutout portion (57) formed at a rear end (56a) of the portion (56) surrounded by the front reinforcing bead (53).

## Patentansprüche

1. Oberteilstruktur (10) eines Fahrzeugs, wobei die Struktur (10) umfasst:
eine Dachplatte (25), die auf einem Oberteil des Fahrzeugs angeordnet ist;
eine hintere Dachschiene (26), die an einem hinteren Endabschnitt (25a) der Dachplatte (25) angeordnet ist und sich seitlich des Fahrzeugs erstreckt;
eine Dachversteifung (27), die vor der hinteren Dachschiene (26) angeordnet ist und sich seitlich des Fahrzeugs erstreckt;
eine Antenne (28), die auf einer Oberseite (25b) der Dachplatte (25) angeordnet und oberhalb der hinteren Dachschiene (26) und der Dachversteifung (27) lokalisiert ist;
wobei die Dachversteifung (27) ein damit einstückig ausgebildetes vorderes Tragteil (51) aufweist, um ein vorderes Teil (28d) der Antenne (28) zu tragen, und die hintere Dachschiene (26) ein damit einstückig ausgebildetes hinteres Tragteil (41) aufweist, um ein hinteres Teil (28a) der Antenne (28) zu tragen,
**dadurch gekennzeichnet, dass** ein hinteres Ende der Dachversteifung (27), in Vorne- und Hintenrichtung des Fahrzeugs (26), mit Abstand vor und getrennt von einem vorderen Ende der hinteren Dachschiene (26) angeordnet ist.

2. Die Struktur von Anspruch 1, worin das vordere Tragteil (51) der Dachversteifung (27) einen vorderen Verstärkungswulst (53) mit einer nach unten vertieften Form enthält, und das hintere Tragteil (41) der hinteren Dachschiene (26) einen hinteren Verstärkungswulst (43) mit einer nach unten vertieften Form enthält, wobei sich der hintere Verstärkungswulst (43) weiter seitlich auswärts des Fahrzeugs erstreckt als der vordere Verstärkungswulst (53).

3. Die Struktur von Anspruch 2, worin der vordere Verstärkungswulst (53) des vorderen Tragteils (51) der Dachversteifung (27) in Vorne- und Hintenrichtung des Fahrzeugs orientiert ist und eine sich zur Rückseite des Fahrzeugs aufweitende angenähert U-förmige Konfiguration hat, wobei das vordere Tragteil (51) ferner einen Abschnitt (56) aufweist, der von dem vorderen Verstärkungswulst (53) umgeben ist und mit Abstand zur Dachplatte (25) nach unten vertieft ist.

4. Die Struktur von Anspruch 2 oder 3, worin der hintere Verstärkungswulst (43) des hinteren Tragteils (41) rechte und linke hintere Wulstabschnitte (44, 45) sowie einen Öffnungsabschnitt (46) enthält, der zwischen den linken und rechten hinteren Wulstabschnitten (44, 45) einer Breitenmitte des Fahrzeugs angeordnet ist.

5. Die Struktur von Anspruch 3 oder 4, worin der von dem vorderen Verstärkungswulst (53) umgebene Abschnitt (56) einen Ausschnitt (57) aufweist, der am hinteren Ende (56a) des vom vorderen Verstärkungswulst (53) umgebenen Abschnitts (56) ausgebildet ist.

## Revendications

1. Une structure de la partie supérieure (10) d'un véhicule, la structure (10) comprenant :
un panneau de toit (25) disposé sur une partie supérieure du véhicule ;
un rail de toit arrière (26) disposé sur une partie d'extrémité arrière (25a) du panneau de toit (25) et s'étendant latéralement par rapport au véhicule ;
un renfort de toit (27) disposé à l'avant du rail de toit arrière (26) et s'étendant latéralement par rapport au véhicule ;
une antenne (28) disposée sur une surface supérieure (25b) du panneau de toit (25) et située au-dessus du rail de toit arrière (26) et du renfort de toit (27) ;
le renfort de toit (27) possédant une partie de support avant (51) intégrée avec lui pour soutenir une partie avant (28d) de l'antenne (28), et le rail de toit arrière (26) possédant une partie de support arrière (41) intégrée avec lui pour soutenir une partie arrière (28a) de l'antenne (28),
**caractérisée en ce qu'**une extrémité arrière du renfort de toit (27) est séparée à l'avant et espacée d'une extrémité avant du rail de toit arrière (26) dans une direction d'avant en arrière du véhicule (26).

2. La structure selon la revendication 1,
dans laquelle la partie de support avant (51) du renfort de toit (27) comprend un bourrelet de renforcement avant (53) possédant une forme évidée vers le bas et la partie de support arrière (41) du rail de toit arrière (26) comprend un bourrelet de renforcement arrière (43) possédant une forme évidée vers le bas, le bourrelet de renforcement arrière (43) s'étendant plus latéralement vers l'extérieur du véhicule que le bourrelet de renforcement avant (53).

3. La structure selon la revendication 2,
dans laquelle le bourrelet de renforcement avant (53) de la partie de support avant (51) du renfort de toit (27) est orienté dans une direction d'avant en arrière du véhicule et possède une forme essentiellement en U s'élargissant vers l'arrière du véhicule, la partie de support avant (51) comprenant par ailleurs une partie (56) entourée par le bourrelet de renforcement avant (53) et étant évidée vers le bas dans une relation espacée par rapport au panneau de toit (25).

4. La structure selon l'une des revendications 2 ou 3,
dans laquelle le bourrelet de renforcement arrière (43) de la partie de support arrière (41) comprend les parties de bourrelet arrière gauche et droite (44, 45) et une partie d'ouverture (46) disposée entre les parties de bourrelet arrière gauche et droite (44, 45) au milieu d'une largeur du véhicule.

5. La structure selon l'une des revendications 3 ou 4,
dans laquelle la partie (56) entourée par le bourrelet de renforcement avant (53) possède une partie découpée (57) formée à une extrémité arrière (56a) de la partie (56) entourée par le bourrelet de renforcement avant (53).
